# EUROPEAN PATENT APPLICATION

(11) **EP 4 477 292 A1**
(43) Date of publication of application: **18.12.2024**
(21) Application number: 23179300.1
(22) Date of filing: 14.06.2023
(51) Int. Cl.: B01D 53/14

(54) **CO2- ABSORBENT COMPOSITION AND METHOD FOR CO2 ABSORPTION**

(71) Applicant: CO2CirculAir B.V., 6846 CR Arnhem (NL)
(72) Inventor: TER MEULEN, Berend Philippus, 6846 CR Arnhem (NL); HANEMAAIJER, Jan Henk, 6846 CR Arnhem (NL); FRANKEN, Antonius Christianus Maria, 6846 CR Arnhem (NL); THOLEN, Johannes Petrus Paulus, 6846 CR Arnhem (NL); FELIX, Jeffrey Erwin, 6846 CR Arnhem (NL)
(74) Representative: van Dam, Vincent

(57) **Abstract**

The present invention relates to an absorbent composition for absorbing carbon dioxide from a gas mixture, in particular from ambient air. The present invention also relates to methods for separating and recovering carbon dioxide from said gas mixture. The present invention also relates to systems for separating and recovering carbon dioxide from said gas mixture.

## Description

The present invention relates to an absorbent composition for absorbing carbon dioxide from a gas mixture, in particular from ambient air. The present invention also relates to methods for separating and recovering carbon dioxide from said gas mixture. The present invention also relates to systems for separating and recovering carbon dioxide from said gas mixture.

CO₂ is an important compound for life on earth. In nature, CO₂ is absorbed from the air via chlorophyll and converted into plant material via photosynthesis. On the other hand CO2 is also known to contribute to global warming.

A key role in the mitigation of global warming lies in the transition to a net zero to negative emission system in which the amount of CO₂ released into the atmosphere is equivalent or less to the amount being removed. In this context removal of CO₂ is also referred to as carbon removal or decarbonization. Carbon removal technologies may offset emissions of sectors that are difficult to decarbonize, such as aviation and heavy industry and thus support a faster transition.

Intergovernmental Panel on Climate Change (IPCC) pathways that limit global warming to 1.5°C make use of carbon capture technologies to various extents.

In an industrial environment it is possible to capture CO₂ directly from flue gas or even from air and convert it into chemical building blocks for existing and new processes and for energy carriers, such as methanol. In this way, the use of fossil fuels can be completely avoided and replaced by CO₂ as a carbon source. CO₂ can also be converted into synthesis gas (syngas) by reacting CO₂ with hydrogen. The preparation of synthetic fuels, such as kerosene for aircraft, is then possible. Furthermore, when captured in KOH or NaOH, CO₂ can be precipitated in the form of K₂CO₃ or Na₂CO₃ with the addition of CaCl₂ as a solid CaCO₃, which can serve as a substitute for fossil limestone in the preparation of cement. In these applications no further increase of CO₂ concentration in the atmosphere takes place. After all, the CO₂ that is still emitted has first been removed from the air, thus providing a very short CO₂ cycle.

Many approaches exist for capturing carbon dioxide from industrial gases having a high concentration of carbon dioxide, such as flue gas.

It is in principle also possible to absorb CO₂ from ambient air (low concentration of CO₂). Absorption from ambient air has many operational advantages as compared to absorption from flue gases, such as simple installation of equipment, easy integration into existing processes, less safety requirements, a direct link with production processes is not required, i.e. no extra costs when the production process is phased out, and no extra costs for adapting industrial installations.

The process of absorbing CO₂ from ambient air is often referred to as Direct Air Capture (DAC) . DAC is a process of removing CO₂ directly from the air and generating a concentrated stream of CO₂ for sequestration or utilization. DAC may have essentially 2 alternative routes:
(1) Liquid direct air capture, in which air passes through liquid chemical solutions, where CO₂ is removed while returning the rest of the air to the environment.
(2) Solid direct air capture that uses solid sorbent filters that chemically bind with CO₂. When the filters are heated, they release the concentrated CO₂, which can be captured for storage or use.

Conventional types of DAC processes use amine-based absorbents in combination with alkaline agents and forced circulation by using blowers to transport the air through the scrubbers. Currently, these DAC technologies encounter some bottlenecks. First, loss of amines occurs through degeneration during the regeneration at higher temperature and through oxidation by oxygen in the air. Secondly, steam is required for regeneration unless waste heat at about 100 °C is available. Finally, use of liquid absorbent in direct contact with air in scrubbers may lead to loss of absorption liquid by entrainment and evaporation of the amines.

The present invention aims to improve the existing carbon dioxide techniques, with a particular focus on improving DAC techniques.

### Summary of the invention

In a first aspect the invention relates to an absorbent composition for absorbing carbon dioxide from a gas mixture, comprising in an aqueous solution: one or more hydroxide; one or more amino acid; and one or more polyol; wherein the molar amount of hydroxide in the composition exceeds the amount of hydroxide required to neutralize said one or more amino acid.

In a second aspect the invention relates to a method for separating carbon dioxide from a gas mixture, bringing said gas mixture into contact with the absorbent composition according to the first aspect to absorb carbon dioxide from said gas mixture into the composition.

In a third aspect the invention relates to method for recovering carbon dioxide from a gas mixture, comprising separating carbon dioxide from said gas mixture in accordance with the method of the second aspect, wherein carbonate or bicarbonate is formed; and regenerating carbon dioxide from said carbonate or bicarbonate.

In a fourth aspect the invention relates to a system for separating carbon dioxide from a gas mixture, comprising a carbon dioxide absorber unit, comprising the absorbent composition according to the first aspect. The method of the second aspect may be carried out by means of the system of the fourth aspect.

In a fifth aspect the invention relates to a system for recovering carbon dioxide from a gas mixture comprising a carbon dioxide absorber unit, comprising the absorbent composition according to the first aspect to absorb carbon dioxide from said gas mixture into the composition, forming a carbonate or bicarbonate; and a unit for regenerating carbon dioxide from said carbonate or bicarbonate. The method of the third aspect may be carried out by means of the system of the fifth aspect.

### Short description of the drawings

Fig. 1 shows a schematic representation of an exemplary carbon dioxide absorber unit of an exemplary system according to the invention.
Fig. 2 shows a schematic representation of another exemplary carbon dioxide absorber unit of an exemplary system according to the invention.
Fig. 3 shows a schematic representation of a flat sheet membrane in a side view.
Fig. 4 shows the flat sheet membrane of Fig. 3 in a perspective view.
Fig. 5A shows a schematic representation of a carbon absorber unit comprising multiple of the flat sheet membranes of Fig. 3 and 4 in another embodiment. Fig. 5B shows an assembly of multiple of the units of Fig. 5A.
Fig. 6 shows a schematic representation of an exemplary system for recovering carbon dioxide according to the invention.

### Detailed description of the invention

The present invention is based on the finding that the combination of amino acids, hydroxide in a molar excess with regard to the amino acids and polyols in an aqueous absorbent solution allows highly efficient carbon dioxide absorption into the absorbent.

The use of amino acids in carbon dioxide capture has been described for instance in "AMINO ACID SALT SOLUTIONS FOR CARBON DIOXIDE CAPTURE", Magdalena Elzbieta Majchrowicz, Enschede, The Netherlands, 2014, ISBN: 978-90-365-3780-3. Amino acids contain at least one basic carboxyl or sulphonyl group and one acidic amino group. In a solution with no other solutes an amino acid exists as a zwitterion, which has no overall electrical charge but contains separate groups that are negatively and positively charged. In solutions with other ions than those derived from the amino acids the groups of the amino acid zwitterion may be neutralized. The basic part of the amino acid picks up a proton upon addition of an acid to the solution, while the addition of a base removes a proton from the ammonium group of the amino acid, leaving the molecule with a net negative charge.

This negatively charged anion, having a deprotonated amino group, can react with carbon dioxide or in other words, absorb it.

Upon this absorption a zwitterion and a carbamate are formed. The carbamate undergoes hydrolysis which produces a deprotonated amino acid and a carbonate/bicarbonate. The deprotonated amino acid is then in principle available for reacting with another carbon dioxide molecule.

The carbonate/bicarbonate may be processed further as will be explained further on.

The inventors observed in this regard that a relatively high hydroxide/amino acid ratio is favorable for the absorption rate, especially in the high pH range (normally pH 11-14) which favors the equilibrium to the deprotonated state of the amino acid that is capable of reacting with carbon dioxide. By working with a relatively high excess of hydroxide in accordance with the present invention, the amino acid basically acts as a catalyst and the absorption of CO₂ is accelerated.

The concentration of the amino acids is however limited by the solubility of the respective amino acids and the viscosity of the solution. Also the iso-electric point (pKi) of the amino acid is an important factor, because at a pH below this point, usually at pH 11 or less, the equilibrium of the molecule shifts to the protonated (NH₃⁺) form, so that the amino acid cannot bind CO₂ anymore.

These factors impose limitations to the capacity of amino acid mediated carbon dioxide capture.

The inventors have now found that the CO₂ absorption rate can be improved by adding a polyol component to the absorbent solution. The inventors have observed in this regard that the additional presence of polyols in the hydroxide/amino acid solution increases carbon dioxide uptake further, and even below a pH of 11, under which circumstances carbon dioxide uptake would be very low if no polyols were used due to the abovementioned equilibrium shift of the amino acids. Without wishing to be bound to a theory the inventors believe that the presence of the polyols increases the solubility of the carbon dioxide in the absorbent over a broad pH range. The higher concentration (relative to water) of dissolved CO₂ in the solution may on its turn then stimulate the hydroxide/amino acid mediated conversion to carbonate/bicarbonate.

Apart from this, the inventors have also observed that the addition of polyols decreases water evaporation. This is advantageous because water evaporation results in transport of water vapor through the pores of a membrane opposite to the direction of the diffusion of CO₂ from the air to the absorbent. This decreases the rate of absorption and is therefore undesirable. Furthermore, water evaporation must be compensated by additions of water, which is also undesirable.

The amount of polyol in the absorbent composition is preferably such that the solution does not become too viscous. Namely, upon increasing polyol concentrations, viscosity of the solution will also increase. This may increase the required pressure to provide the necessary absorbent velocity on the absorbent side of an interface between the air and the absorbent. This is not preferred, because at high pressures absorbent solution may leak through the pores of the interface, such as a membrane. Therefore, in view of viscosity preferences, the content of polyol in the absorbent composition is preferably 50 wt.% or less based on the total weight of the absorbent composition, such as between 5 and 50 wt.%, between 10 and 35 wt.% or between 18 and 32 wt.%.

The advantageous effects of polyols in the absorbent are less significant above concentrations of 10 to 40 wt.%. Therefore, the content of polyol in the absorbent composition is preferably 10 to 40 wt.% or less based on the total weight of the absorbent composition such as between 5 and 30 wt.%, for example between 10 and 30 wt.%, between 18 and 30 wt.%

Preferably the one or more polyol is selected from glycerol, propylene glycol, sorbitol and triethylene glycol or a combination thereof. These polyols perform very well in the sense of carbon dioxide uptake and meet the requirements as regards viscosity and are thus well compatible with suitable interfaces between the air and absorbent phase, such as membranes. Among these polyols, propylene glycol and glycerol may be even further preferred because they perform very well in the sense of carbon dioxide uptake and because their surface tension characteristics are such when a membrane is used as an interface, that they do not moisten the (generally hydrophobic) membrane to an unfavorable extent that leads to leakage through membrane pores. Glycerol is the most preferred polyol in this respect because it is less viscous, so that less pressure is needed to provide a suitable absorbent velocity, thus further decreasing a risk of leakage through pores of an interface between the air and the absorbent.

With regard to the hydroxide component of the absorbent composition, any alkaline source of hydroxide may in principle be suitable as long as deprotonated amino acids are generated for reacting with carbon dioxide molecules.

It is preferred that said hydroxide is included in the composition as one or more metal hydroxide selected from an alkali metal (e.g. K or Na) hydroxide. These are strong bases that are able to deliver the required amount of hydroxides and are compatible with electrolytical regeneration of carbon dioxide. Furthermore, the formed carbonate/bicarbonates may be absorbed by the metal cations to form salts that can be precipitated and as such be recovered or subjected to regeneration of carbon dioxide.

In a preferred embodiment the source of hydroxide is KOH or NaOH. These are odorless and non-toxic absorbents which are not sensitive to chemical or biological degradation. As a metal hydroxide KOH has particular preference, primarily because of the much higher solubility of K₂CO₃ and KHCO₃ compared to Na₂CO₃ and NaHCO₃ so that precipitation of salts in the fibers or elsewhere in the process is prevented or kept at a minimum.

With regard to the amino acid components in the absorbent composition any amino acid as disclosed in prior art with regard to carbon dioxide capture may be applied, including but not limited to one or more amino acids selected from the group of alanine, arginine, asparagine, aspartic acid, cysteine, glutamic acid, glutamine, glycine, histidine, isoleucine, leucine, lysine, methionine, phenylalanine, proline, serine, taurine, threonine, tryptophan, tyrosine, valine, selenocysteine and pyrrolysine. The inventors have observed good results with lysine and glycine. Thus, in a suitable embodiment said one or more amino acid is selected from lysine, glycine or a combination thereof.

The functional components of the absorbent of the present invention are the amino acid(s), hydroxide(s) and polyol(s). Although it is possible to include further components to a certain extent, for instance up to 10 wt.% of the solution, the absorbent solution may suitably have said amino acid(s), hydroxide(s) and polyol(s) comprised therein without additional components added. In a suitable embodiment the absorbent comprises glycerol as polyol and KOH as hydroxide source, with an amino acid of choice as amino acid source, for instance glycine and/or lysine.

As mentioned above, a molar excess of hydroxide with regard to the amino acids is used. In order to shift the deprotonation equilibrium in favor of carbon dioxide capture it is preferred that at the molar concentration of amino acids is 50% or less than that of the hydroxides (e.g. NaOH, KOH) included in the composition. Thus, the molar amount of hydroxide in the composition preferably exceeds the amount of hydroxide required to neutralize said one or more amino acid by at least a factor 2. This means that the composition contains preferably free hydroxide ions in at least equimolar amounts to the amino acid present in the composition.

The absorbent composition can suitably be used in a method for separating carbon dioxide from a gas mixture, by bringing said gas mixture into contact with the absorbent composition to absorb carbon dioxide from said gas mixture air into the absorbent composition. The absorbent composition may be applied in principle to capture carbon dioxide from any gas mixture that contains carbon dioxide in a low or high content, including but not limited to flue gas or ambient air.

It is noted that the present invention finds applicability in liquid Direct Air Capture (DAC) processes. In this respect, it is preferred that in the context of the present invention the gas mixture from which carbon dioxide is captured or absorbed is ambient air.

In order to allow separation of carbon dioxide from the gas mixture, the gas mixture is suitably brought into contact with the absorbent composition at an interface between said absorbent composition and said gas mixture to absorb carbon dioxide from the gas mixture into the composition. Such an interface may be any suitable interface known in the art of liquid/gas absorption techniques, such as packed bed or a membrane. For this purpose, the system for separating carbon dioxide from a gas mixture according to the invention comprises a carbon dioxide absorber unit, comprising the absorbent composition according to the invention.

Membranes are preferred as interfaces, in particular in view of the preferred application of capturing carbon dioxide from ambient air. It is therefore preferred that the gas mixture is brought into contact with said composition via one or more membrane which forms said interface between said composition and said gas mixture. Therefore, in a preferred embodiment the carbon dioxide absorber unit comprises one or more membrane which forms an interface between said absorbent composition and said gas mixture.

Using such a membrane the gas mixture passes the membrane on the gas mixture side while on the other side, the absorbent side, the liquid absorbent is contained. The liquid absorbent cannot pass the membrane while the gases in the gas mixture may pass the pores of the membrane to enter the absorbent so that the carbon dioxide component therein can be captured and react with the deprotonated amino acids.

It is preferred that the liquid absorbent composition flows with a certain velocity ensure optimal uptake of carbon dioxide.

Said one or more membranes may suitably be formed by multiple hollow fiber membranes. Alternatively, said one or more membranes may be formed by multiple flat sheet membranes. Absorbent solution may be passed through the hollow fibers or in the lumen between the sheets of the sheet membranes, so that carbon dioxide can be efficiently absorbed.

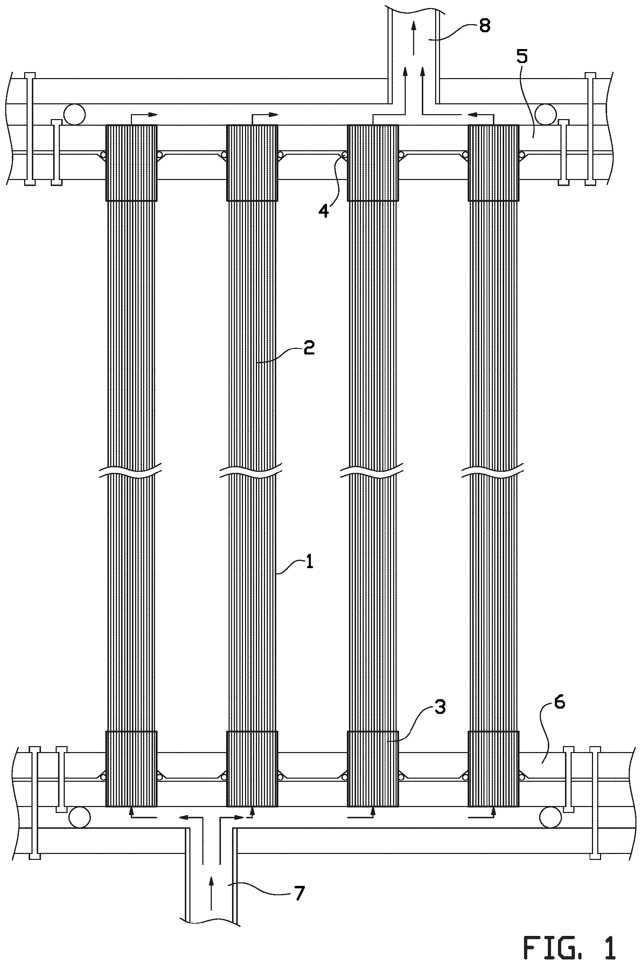

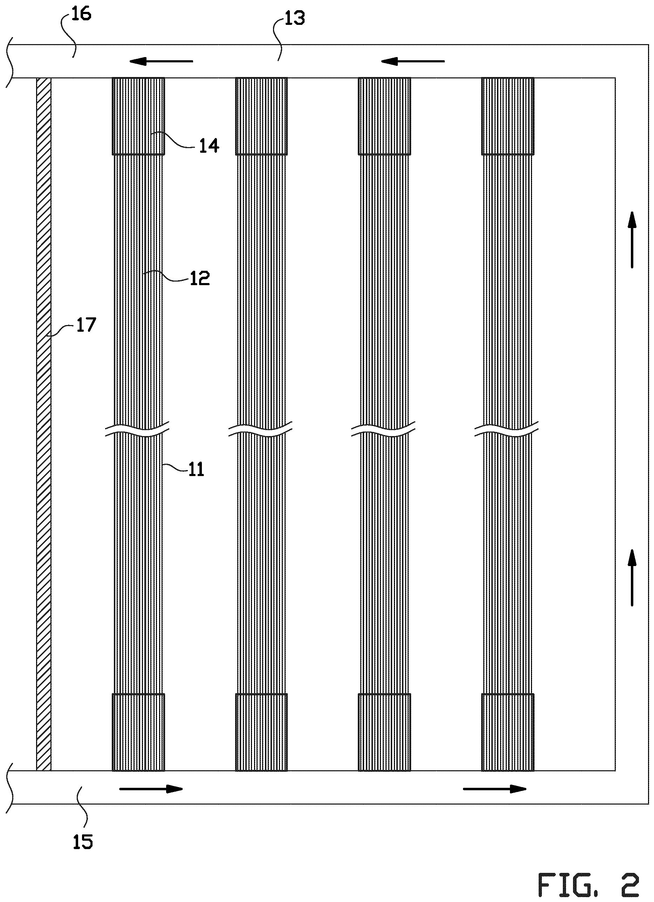

Some exemplary set-ups of absorber units using hollow fiber membranes are shown in Fig. 1 and 2.

The unit shown in Fig. 1 uses hollow fiber membranes 1 in bundles 2, where the ends of the bundles are glued or otherwise connected to short pieces of plastic tubing 3. In the short pieces of plastic tubing a small incision can be made to ensure the positioning of an O-ring 4. These ends are clamped with O-rings 4 in holes in a bottom plate 5 and a top plate. Absorbent solution enters the unit via 7 and is allowed to flow through the fibers in the direction of the arrows and leaves the unit via outlet 8. The flow of the liquid may also be inverted (from top to bottom). The bundles can be placed in a configuration comprising a central bundle and around it at a certain distance a first circle of bundles with a certain mutual spacing. A second circle can be placed around this first circle at the same distance from the first circle as the distance from the first circle to the central beam. The spacing of the beams in the second circle may be equal to or may differ slightly from the spacing of the beams in the first circle. Similarly, if desired, the unit can be expanded with multiple circles of hollow fiber membranes in bundles. In this way, a module of a desired size can be obtained. By fixing the bottom and top plate 5, 6 with spacers at a certain mutual distance that is smaller than the length of the fiber bundles, the fibers in the bundles will move slightly apart and in this manner acquire a certain mutual distance. This allows the gas mixture to flow around all the fibers from all sides and to achieve the largest possible membrane surface for transfer of CO₂ from the gas mixture to the absorbent in the lumen of the fibers. This is in particular useful when CO₂ is to be captured from ambient air, because wind may easily blow through the bundles. Because the unit, either round and square, can be designed the same on all sides and equally accessible from all sides for the flow of air, the use for capturing CO₂ from the air does not depend on the local wind direction.

The unit shown in Fig. 2 also uses equal bundles 12 of hollow fiber membranes 11. The ends of the bundles are glued into the "leg" of tubular plastic T-parts 13. By gluing with short plastic tubes 14, the T-parts are mutually connected to units of the desired width. This results in flat screens of fiber bundles with a certain mutual distance, with the entrances of the fiber bundles being connected via an inlet pipe 15 and the exits of the fiber bundles 12 in the same way via an outlet pipe. The flow of the liquid may also be inverted (from top to bottom). The bottom and top of the flat screens are fixed a spacer 17 at a certain distance from each other that is smaller than the length of the fiber bundles. As a result, the fibers in the bundles will move slightly apart and acquire a certain mutual distance. Just like in the unit of Fig.1, this allows the gas mixture (e.g. air, wind) to flow around all the fibers from all sides and to achieve the largest possible membrane surface for transfer of CO₂ from air to the absorbent in the lumen of the fibers. Several such flat screens can be connected together via common inlet and outlet pipes, with the bottom and top of all screens fixed at an equal distance. In this way a module can be formed with different length and width ratios and with a height that depends on the length of the fibers in the bundles.

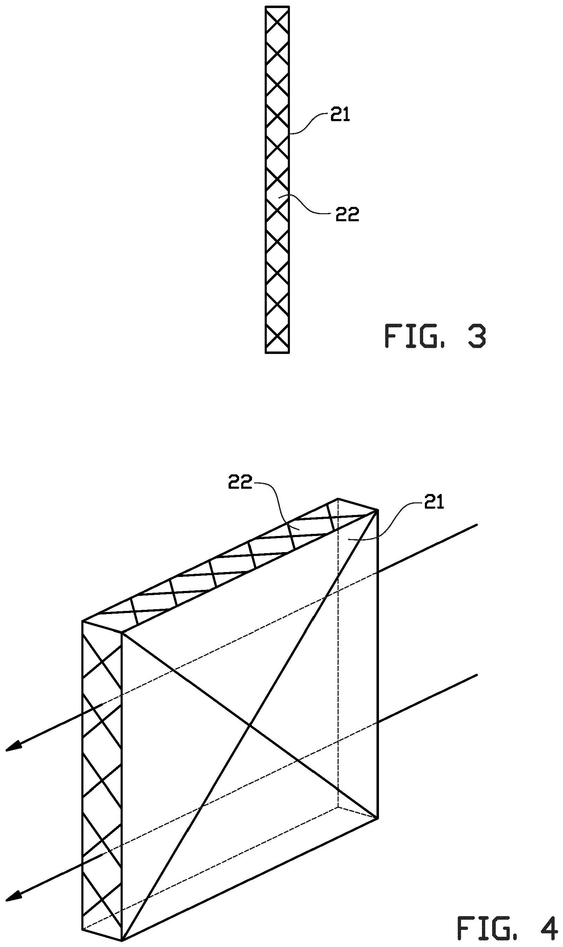

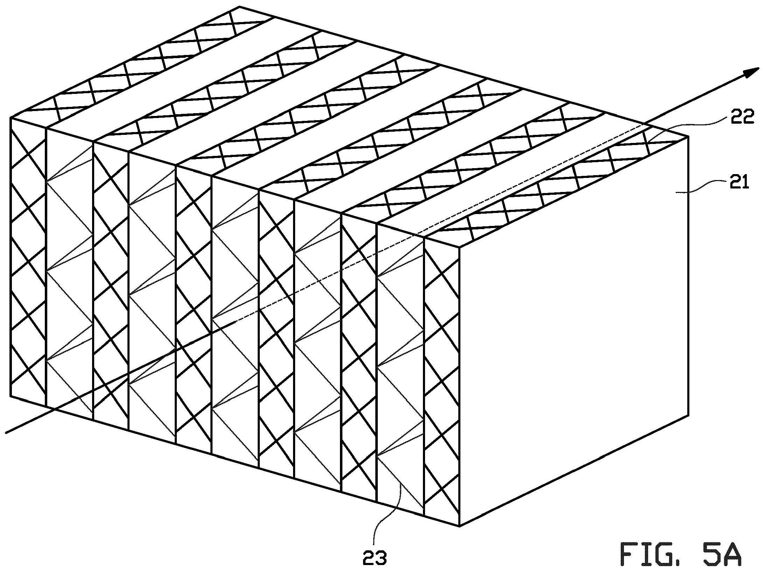

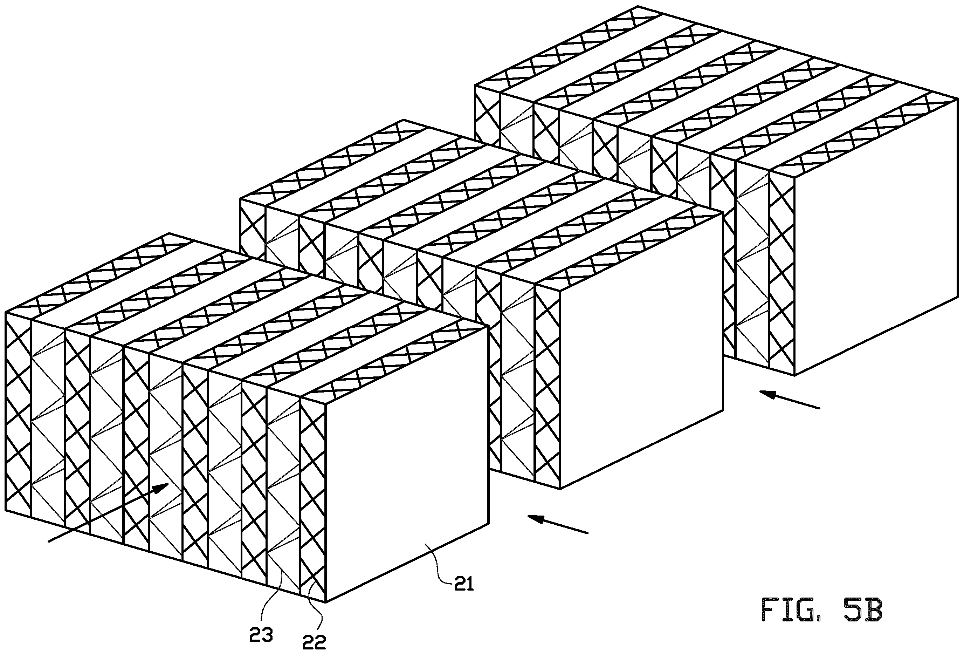

Exemplary absorber units may use flat sheet membranes as schematically shown in figures 3 to 5. Herein Fig. 3 shows a schematic representation of a flat sheet membrane in a side view and Fig. 4 shows the flat sheet membrane of Fig.3 in a perspective view. Fig. 5A shows a schematic representation of a carbon absorber unit comprising multiple of the flat sheet membranes of Fig. 3 and 4 in another embodiment, which uses flat membranes instead of hollow fibers. The advantage of flat membranes over hollow fibers is that the flat membranes are generally thinner and therefore less resistant to the transfer of molecules from the gas phase to the liquid phase. Flat membranes 21 can be formed as an envelope, with a spacer 22 placed inside the envelope to prevent the front and back sides from sticking together and to allow absorbent to flow through the envelope in the direction of the arrows in Fig. 4. A provision is made at the bottom and top of the envelope for the inlet and outlet of the absorbent (not shown). Several such envelopes can be placed next to each other to jointly form a module as shown in Fig.5A. The envelopes should be placed at a certain distance from each other in the module to allow an air or gas past the envelopes. Since the membranes used in Fig.5A are in fact thin sheets of non-rigid plastic, in such envelopes they will have a tendency to expand sideways under the influence of the liquid pressure when the liquid absorbent passes through them. As a result, the space between the envelopes will be reduced and the air or gas flow between the envelopes will be obstructed or made more difficult. To prevent this, spacers 23 can be placed between the envelopes. These can be spacers in the form of thin, corrugated plates (metal or plastic) as shown in Fig.5A positioned so that the corrugations of the plates run in the direction of the air or gas flow (arrow in Fig.5A). Alternatively small round solid bars or tubes at a certain distance from each other may be used as spacers (not shown). Multiple of the absorber units of Fig. 5A may be assembled in parallel fashion as shown in Fig. 5B, this way wind may enter the assembly form multiple directions (as indicated with arrows)

Upon absorption of carbon dioxide several downstream possibilities can be envisaged.

One possibility is that CaCO₃ is precipitated from Na₂CO₃ or K₂CO₃ produced upon carbon dioxide absorption by adding CaCl₂. The CaCO₃ thus formed may be used as raw material in the cement industry and as such serve as a substitute for fossil limestone.

In addition, or alternatively, carbon dioxide can be regenerated for further use. With regenerating carbon dioxide the absorbent can also be regenerated.

For instance, regenerated carbon dioxide may be incorporated into chemical building blocks for several industrial processes and for energy carriers, such as methanol. The carbon dioxide can also be converted into syngas by reacting with hydrogen with the purpose of producing fuel.

In this respect the invention also relates to a method for recovering or regenerating carbon dioxide from a gas mixture, in particular ambient air, comprising separating carbon dioxide from ambient air in accordance with the teachings above, wherein carbonate or bicarbonate is formed; and regenerating carbon dioxide from said carbonate or bicarbonate. For this purpose, the system for recovering carbon dioxide comprises a carbon dioxide absorber unit, comprising a composition comprising the absorbent composition as defined above to absorb carbon dioxide from the gas mixture into the composition, forming a carbonate or bicarbonate; and a unit for regenerating carbon dioxide from the carbonate or bicarbonate.

The (bi)carbonate herein is preferably in the form of a bi(carbonate) of the metal cation of the metal hydroxides specified above, i.e. preferably Na₂CO₃/NaHCO₃ or K₂CO₃/KHCO₃.

Although regeneration may in principle be possible by using thermal energy, for instance by heating the absorbent to 100-100 °C this leads to degradation of amino acids and may be detrimental to the interface between the gas phase and the absorbent phase, in particular when a membrane is used.

In this respect it is preferred that the (bi)carbonates, preferably in the form of metal hydroxide salts are subjected to electrolytic regeneration of carbon dioxide.

Such electrolytic regeneration may be performed by a membrane electrolysis or electrodialysis process.

It is preferred that electrodialysis with bipolar membranes is used. In this respect the abovementioned regeneration unit may suitably comprise or be an electrodialysis unit with bipolar membranes.

With bipolar membranes the electrodes do not produce oxygen and hydrogen, but water is separated in H+ ions on one side of the membrane and OH- ions on the other side of the membrane. This prevents oxidation of amino acids and polyol in the absorbent solution. The use of bipolar membranes also reduces the required amount of electrical energy and an additional step of separating carbon dioxide from a CO₂/O₂ gas mixture, which would be required with standard electrolysis processes, is not necessary with bipolar membranes.

In respect of electrolytic regeneration of CO₂ and the absorbent it is also noted that that the increased uptake of CO₂ at pH below 11 by using the absorbent of the present invention implies that relatively more carbonate is converted to bicarbonate. This is economically important in the context of recovering CO₂ because it takes less electrical energy in an electrolytic process to release CO₂ from a bicarbonate solution than from a carbonate solution.

In a preferred embodiment, one or more storage units, such as storage tanks, are provided between the absorption unit and the regeneration unit where the absorbent solution wherein carbon dioxide is captures can be stored for further use, and where clean absorbent and/or regenerated absorbent can be stored.

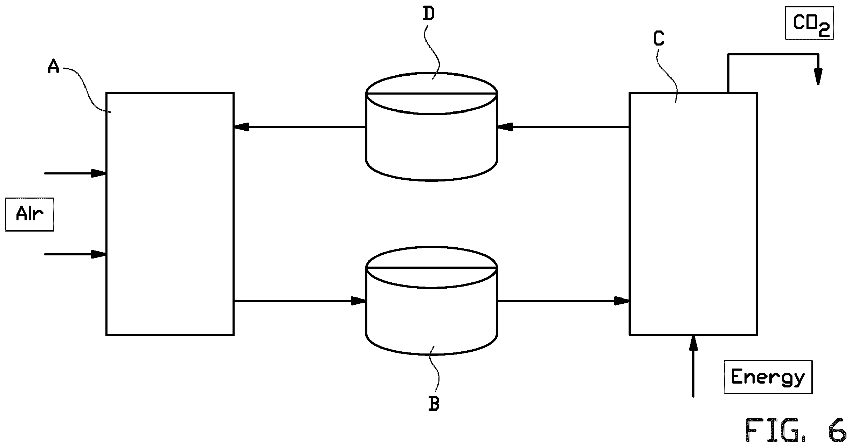

A system for recovering carbon dioxide from ambient air is shown in Fig.6 wherein air is passed through absorbent unit A which contains an absorbent composition according to the invention. Upon absorption of said carbon dioxide the absorbent composition is passed to storage unit B. The stored absorbent composition can be passed to regeneration unit C where carbon dioxide is regenerated from the absorbent for further use upon input of energy, for instance electric energy using a membrane electrodialysis process. This produces regenerated carbon dioxide and regenerated absorbent composition. The latter can be recycled to the absorbent unit A, optionally via another storage unit D.

The method for recovering carbon dioxide according to the invention can be operated as a coupling of 2 batch-operated process steps (absorption and regeneration), whereby in both cases the absorbent is recirculated over the absorber unit and over the regeneration unit. This recirculation is continued until the desired degree of absorption or regeneration is reached. The advantage of this is that the desired absorption or regeneration can be achieved independently of external conditions. Because absorption and regeneration are disconnected by the storage tanks, absorption can continue 24/7 if regeneration is temporarily halted due to anticipation of low electricity rates. The dimensions of the storage units then determine the maximum duration of both cycles.

The method for recovering carbon dioxide according to the invention can also be operated as a fully continuous process with preset residence times (flow rates) in both the absorption and regeneration steps.

### Examples

The following examples are meant to illustrate the invention and not to limit the scope of the claims.

Exemplary solutions were prepared were prepared in a volume of 6 liters with compositions as listed in Table 1.

**Table 1: exemplary absorbent compositions**

| Example | Hydroxide content (M) | Amino acid content (M) | Polyol (mass%) |
|---|---|---|---|
| 1 | 0.8 M KOH | 0.4 M glycine | 18% glycerol |
| 2 | 0.8 M KOH | 0.4 M glycine | 18% propylene glycol |
| 3 | 0.8 M KOH | 0.4 M glycine | 24% glycerol |
| 4 | 1.0 M KOH | 0.5 M lysine | 30% glycerol |
| 5 | 1.5 M KOH | 0.5 M glycine | 32 % propylene glycol |

The absorbent solutions of examples 1-5 were passed through an absorbent unit as basically described in Fig.1.

CO₂ absorption was measured at an initial stage in which the concentration hydroxide was very high (pH 14→13) and in a later stage, where the concentration of hydroxide was lower (pH 13→ 10). The results are shown in Table 2 below:

**Table 2: test results of membrane gas absorption experiments with examples 1-5.**

| Example | Carbon dioxide flux (pH 14→13) [g/m².h] | Carbon dioxide flux (pH 13→10) [g/m².h] | Maximum carbon dioxide uptake [g CO²/kg absorbent] | Water evaporation [g/m².h] |
|---|---|---|---|---|
| 1 | 1.3 | 0.4 | 32.1 | 46 |
| 2 | 1.4 | 0.3 | 37.8 | 39 |
| 3 | 1.2 | 0.4 | 31.9 | 32 |
| 4 | 1.2 | 0.3 | 40.5 | 21 |
| 5 | 1.5 | 0.5 | 39.6 | 14 |

Table 2 shows efficient carbon dioxide capture in combination with low water evaporation. The reduction of water evaporation becomes more significant with higher polyol contents, which shows that these effects are due to the inclusion of the polyols. This shows the advantages of the presence of polyols in accordance with the invention because water evaporation results in transport of water vapor through the pores of a membrane opposite to the direction of the diffusion of CO₂ from the air to the absorbent. Evaporation would therefore decrease the rate of absorption and is therefore undesirable. Therefore, the results presented in Table 2 indicate that the absorbent composition according to the invention results in improved absorption of CO₂ from the air into the absorbent.

## Claims

1. Absorbent composition for absorbing carbon dioxide from a gas mixture, comprising in an aqueous solution:
one or more hydroxide;
one or more amino acid; and
one or more polyol;
wherein the molar amount of hydroxide in the composition exceeds the amount of hydroxide required to neutralize said one or more amino acid.

2. Absorbent composition according to any of the previous claims, wherein the content of polyol in the absorbent composition is 50 wt.% or less based on the total weight of the absorbent composition, preferably wherein the content of polyol in the absorbent composition is 10 to 40 wt.% or less based on the total weight of the absorbent composition.

3. Absorbent composition according to claim 1, wherein said hydroxide is included in the composition as one or more metal hydroxide selected from an alkali metal (e.g. K or Na) hydroxide, preferably wherein said metal hydroxide is KOH.

4. Absorbent composition according to any of the previous claims, wherein said one or more amino acid is selected from lysine, glycine or a combination thereof.

5. Absorbent composition according to any of the previous claims, wherein said one or more polyol is selected from glycerol, propylene glycol, sorbitol and triethylene glycol or a combination thereof, preferably wherein said one or polyol is glycerol.

6. Absorbent composition according to any of the previous claims, comprising glycerol as polyol and KOH as hydroxide source.

7. A method for separating carbon dioxide from a gas mixture comprising bringing said gas mixture into contact with an absorbent composition according to any of the previous claims to absorb carbon dioxide from said gas mixture into the composition.

8. Method according to claim 7, wherein the gas mixture is brought into contact with said composition via one or more membrane which forms an interface between said composition and said gas mixture, preferably wherein said one or more membranes are formed by multiple hollow fiber membranes; or wherein said one or more membranes are formed by multiple flat sheet membranes.

9. Method for recovering carbon dioxide from a gas mixture, comprising
separating carbon dioxide from a gas mixture in accordance with the method of claim 7 or 8, wherein carbonate or bicarbonate is formed; and
regenerating carbon dioxide from said carbonate or bicarbonate.

10. Method according to claim 9, wherein regenerating carbon dioxide from the carbonate or bicarbonate takes place by electrodialysis, preferably with bipolar membranes.

11. System for separating carbon dioxide from a gas mixture, comprising a carbon dioxide absorber unit, comprising the absorbent composition according to any of the claims 1 to 6.

12. System for recovering carbon dioxide from a gas mixture comprising
a carbon dioxide absorber unit, comprising a composition comprising the absorbent composition according to any of the claims 1 to 6 to absorb carbon dioxide from the gas mixture into the composition, forming a carbonate or bicarbonate; and
a unit for regenerating carbon dioxide from the carbonate or bicarbonate.

13. System according to any of the claims 11 or 12, wherein the carbon dioxide absorber unit comprises one or more membrane which forms an interface between said composition and said gas mixture, preferably wherein said one or more membranes are formed by multiple hollow fiber membranes; or wherein said one or more membranes are formed by multiple flat sheet membranes.

14. System according to any of the claims 12 or 13, wherein said regeneration unit comprises an electrodialysis unit, preferably with bipolar membranes.

15. Absorbent composition according to any of the claims 1 to 6, method according to any of the claims 7 to 10 or system according to any of the claims 11 to 14, wherein said gas mixture is ambient air.
